(19) **Europäisches Patentamt / European Patent Office / Office européen des brevets**

(11) **EP 3 847 520 B1**

(12) **FASCICULE DE BREVET EUROPEEN**

(45) Date de publication et mention de la délivrance du brevet:
**15.06.2022 Bulletin 2022/24**

(21) Numéro de dépôt: **19753128.8**

(22) Date de dépôt: **19.08.2019**

(51) Classification Internationale des Brevets (IPC):
**G05D 23/19** *(2006.01)*    **F24F 1/00** *(2019.01)*
**F24H 1/00** *(2022.01)*    **F24D 19/10** *(2006.01)*
**F24F 11/00** *(2018.01)*

(52) Classification Coopérative des Brevets (CPC):
**G05D 23/1917; F24D 19/1048;** F24F 11/00;
F24F 11/64

(86) Numéro de dépôt international:
**PCT/EP2019/072182**

(87) Numéro de publication internationale:
**WO 2020/048761 (12.03.2020 Gazette 2020/11)**

(54) **PROCÉDÉ ET SYSTÈME DE PILOTAGE ET DE RÉGULATION D'UN SYSTÈME DE CHAUFFAGE D'UN LOCAL**

VERFAHREN UND SYSTEM ZUR STEUERUNG UND REGELUNG EINES HEIZSYSTEMS FÜR GEBÄUDE

METHOD AND SYSTEM FOR CONTROLLING AND REGULATING A SYSTEM FOR HEATING PREMISES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2018 FR 1858027**

(43) Date de publication de la demande:
**14.07.2021 Bulletin 2021/28**

(73) Titulaire: **Electricité de France
75008 Paris (FR)**

(72) Inventeurs:
- **BERNASCONI, Stéphane
  77810 THOMERY (FR)**
- **GASTIGER, Frédéric
  77210 AVON (FR)**
- **DUPEYRAT, Patrick
  77210 AVON (FR)**

(74) Mandataire: **Plasseraud IP
66, rue de la Chaussée d'Antin
75440 Paris Cedex 09 (FR)**

(56) Documents cités:
**WO-A1-2017/192752**    **FR-A1- 2 964 727**
**US-A1- 2014 316 584**

**Description**

L'invention concerne le domaine de la domotique. Plus particulièrement, l'invention concerne le domaine de la régulation et du pilotage d'un système de chauffage dans un local, à partir d'une consigne de température.

Actuellement, un grand nombre de fabricants proposent des systèmes de pilotage du chauffage. La majorité d'entre eux offrent à l'usager la possibilité de piloter le chauffage en fonction du confort thermique souhaité ou d'une consommation maximale souhaitée. Notamment, l'utilisateur peut définir trois températures de consigne à respecter, comprenant une température dite de confort pendant les phases de présence, une température dite de réduit, pendant les phases d'absence et une température dite de nuit, pendant les phases de présence en sommeil.

On connaît notamment le brevet EP3045999 qui décrit un tel système. Plus précisément, ce document décrit un système de régulation et de pilotage d'un système de chauffage à partir de la connaissance d'une donnée de consommation de chauffage. Cette donnée est notamment obtenue par un dispositif de comptage d'énergie mis en place sur le système de chauffage, difficile à mettre en place sur des systèmes de chauffage déjà existants. En variante, la donnée de consommation de chauffage est obtenue par une méthode de désagrégation de courbe de charge pour extraire la part chauffage de la consommation totale du local. Toutefois, ce type de méthode est source d'erreurs.

On connaît également FR2964727 décrivant un procédé de gestion thermique d'un bâtiment, WO2017/192752 décrit un système de thermostats situés dans différent bâtiments fonctionnant en recevant des données météorologiques US2014/316584 décrit un procédé pour optimiser un programme de températures de consigne dans le contrôle d'un système de climatisation. Toutefois, ces systèmes et procédés présentent des inconvénients.

La présente invention vient améliorer la situation.

A cet effet, elle propose un procédé, mis en œuvre par des moyens informatiques, de pilotage et de régulation d'un système de chauffage d'un local, sur une période de temps, à partir d'une consigne reçue de température souhaitée définissant une température de consigne, le procédé comportant les étapes :

- élaborer un modèle de prévision d'une consommation d'énergie globale du local permettant de maintenir une température intérieure du local égale à la température de consigne sur ladite période de temps, ledit modèle s'exprimant comme fonction de la température de consigne par une équation :

$$C_{globale} = GV * \left(Pot_{degH} - Seuil\right) + Talon$$

où :

    ◦ $C_{globale}$ représente la prévision de consommation d'énergie globale du local sur la période de temps,
    ◦ GV représente un coefficient de déperditions thermiques du local,
    ◦ $Pot_{degH}$ représente un écart positif entre la température intérieure estimée du local, et une température extérieure, ladite température intérieure estimée dépendant de la température de consigne, et ledit écart positif étant calculé à chaque pas de temps sur la période de temps,
    ◦ Seuil représente un seuil de température intérieure au-dessus de laquelle un système de chauffage du local est mis en état de désactivation, et
    ◦ *Talon* représente une consommation d'énergie totale en usages non thermosensibles du local, obtenue à partir de données statistiques ;

- puis, définir une valeur maximale de la consommation d'énergie globale sur la période de temps, et, à partir du modèle de prévision de la consommation d'énergie globale du local :
    ◦ obtenir en sortie de procédé une nouvelle température de consigne à atteindre dans le local de sorte que la valeur de la consommation d'énergie globale du local est inférieure ou égale à ladite valeur maximale à l'issue de la période de temps.

Le procédé comprend une autre étape d'envoi de la nouvelle température de consigne à un thermostat permettant le pilotage et la régulation du système de chauffage.

Grâce à ces dispositions, le procédé selon l'invention permet d'effectuer une corrélation entre une température de consigne souhaitée et une consommation maximale souhaitée. De plus, le procédé ne nécessite pas l'utilisation de dispositif intrusif pour déterminer la consommation en chauffage d'un local.

Selon une réalisation, la construction du modèle comprend une étape préalable de :

- une estimation de la température intérieure du local, l'estimation étant effectuée itérativement à chaque pas de temps $\Delta t$, ladite estimation étant exprimée par :

$$T_{int}(i) = T_{int}(i-1) + \left(K_1 * \text{État}_{chauffage} - K_2 * (T_{int}(i-1) - T_{ext}(i-1))\right)\Delta t$$

où :

    ◦ $T_{int}$(i) est la température intérieure estimée à l'itération i,
    ◦ $K_1$, $K_2$ sont des paramètres thermiques du local, représentant respectivement une remontée en température et une chute en température du local, $K_1$, $K_2$ étant obtenus à partir de données historiques du local,
    ◦ $\text{État}_{chauffage}$ est un booléen représentant un état d'activation ou de désactivation du système de chauffage,
    ◦ $T_{ext}$ représente la température extérieure du bâtiment obtenue à partir de données météorologiques prévisionnelles ;

avec une première itération où une valeur de la température initiale $T_{int}$(i0) est choisie parmi l'une et/ou l'autre de :

    o une température par défaut,
    o la température de consigne,
    o une température mesurée ;

et

- une détermination d'un écart positif entre la température intérieure estimée du local et la température extérieure à chaque pas de temps est donnée par :

$$Pot_{degH} = \Delta t \sum_{i=i0}^{I} \max[0, (T_{int}(i) - T_{ext}(i))]$$

où :

    ◦ $Pot_{degH}$ représente l'écart positif entre la température intérieure estimée du local et la température extérieure sur toute la période de temps ;
    ◦ $T_{int}$(i) et $T_{ext}$(i) représentent respectivement ladite température intérieure estimée et ladite température extérieure à chaque pas de temps.

Autrement dit, le modèle de prévision de la consommation d'énergie est élaboré en calculant itérativement la température intérieure du local à partir des paramètres thermiques du local, la température extérieure et la température intérieure calculée à l'itération précédente.

Ainsi, le modèle de prévision de la consommation d'énergie globale du local prend en compte la consommation en chauffage mais aussi d'autres facteurs influant sur la température intérieure tels que la température extérieure.

Selon une réalisation, à chaque pas de temps, une comparaison entre la valeur de la température intérieure estimée et la valeur de la température de consigne est effectuée et, si la valeur de la température estimée à ce pas de temps est supérieure ou égale à la valeur de la température de consigne :

- le booléen $\text{État}_{chauffage}$ est forcé à zéro.

Ainsi, lorsque la température intérieure atteint la température de consigne, le système de chauffage est éteint. Le modèle de consommation tient compte de l'état éteint ou actif du système de chauffage de manière à obtenir précisément la consommation en énergie du local.

Selon une réalisation, à chaque pas de temps, une comparaison entre la valeur de la température intérieure estimée et la valeur de la température de consigne est effectuée et, si la valeur de la température estimée à ce pas de temps est inférieure à la valeur de la température de consigne :

- le booléen $\text{État}_{chauffage}$ est forcé à 1.

De la même manière, lorsque la température intérieure est inférieure à la température de consigne, le système de chauffe est à activer. Le modèle prend en compte l'état du système de chauffage afin de déterminer précisément la consommation en énergie du local.

Selon une réalisation, le procédé comprend une étape d'initialisation des valeurs du coefficient de déperditions thermiques GV, du seuil de température intérieure Seuil et de la consommation d'énergie totale en usages non thermosensibles *Talon* au moyen d'une simulation thermique du local, permettant de générer des données de consommation en énergie estimées, lesdites valeurs initialisées des paramètres GV, Seuil et *Talon* étant injectées dans ledit modèle de prévision.

Ainsi, le procédé est opérationnel immédiatement et ne nécessite aucune phase d'initialisation lors de laquelle la consommation en énergie du local ne peut être estimée. Le procédé proposé présente donc un grand intérêt pour l'utilisateur, du fait de son efficacité immédiate.

Selon une réalisation, au cours de la période de temps, les valeurs du coefficient de déperditions thermiques GV, du seuil de température intérieure Seuil et de la consommation d'énergie totale en usages non thermosensibles *Talon* sont recalculés, le recalcul comprenant :

- obtenir des données historiques de la température intérieure mesurée, de la température extérieure et de la consommation globale en énergie de chauffage,
- calculer l'écart positif $Pot_{degH}$ entre la température intérieure mesurée du local et la température extérieure, à chaque pas de temps pour chaque jour passé de la période de temps, et
- si un nombre de jours passés, pour lesquels l'écart positif $Pot_{degH}$ est supérieur à un écart maximum et pour lesquels la consommation globale en énergie est supérieure à 0, est supérieur à un nombre de jours maximum, le coefficient de déperditions thermiques GV, le seuil de température intérieure Seuil et la consommation d'énergie totale en usages non thermosensibles *Talon* sont calculés selon un premier mode, ou
- si un nombre de jours passés, pour lesquels l'écart positif $Pot_{degH}$ est inférieur à un écart minimum, est supérieur à un nombre de jours minimum, le coefficient de déperditions thermiques GV, le seuil de température intérieure Seuil et la consommation d'énergie totale en usages non thermosensibles *Talon* sont calculés selon un deuxième mode,
- autrement, le coefficient de déperditions thermiques GV, le seuil de température intérieure Seuil et la consommation d'énergie totale en usages non thermosensibles *Talon* conservent leurs valeurs respectives déterminées lors de l'étape d'initialisation.

Ainsi, les valeurs du coefficient de déperditions thermiques GV, du seuil de température intérieure Seuil et de la consommation d'énergie totale en usages non thermosensibles *Talon* sont déterminées précisément en fonction du local et des données historiques en cours de fonctionnement. Cela permet de ne pas nécessiter de phase d'apprentissage préalable lors de laquelle le procédé n'est pas opérationnel. D'autre part, cela permet de calibrer les valeurs de ces coefficients de manière précise de sorte que la consommation en énergie peut être déterminée spécifiquement au local et à l'utilisateur du local.

Selon une réalisation, le procédé comprend :

- définir plusieurs températures de consigne respectivement associées à une pièce du local parmi une pluralité de pièces ;
- appliquer le modèle de prévision d'une consommation d'énergie globale aux pièces du local, de manière à ce que la température intérieure de chaque pièce atteigne la température de consigne associée à ladite pièce ;
- puis, définir une valeur maximale de la consommation d'énergie globale sur la période de temps, et, à partir du modèle de prévision de la consommation d'énergie globale du local :
- obtenir en sortie de nouvelles températures de consigne à atteindre dans les pièces du local respectivement associées audites températures de consignes, de sorte que la valeur de la consommation d'énergie globale du local est inférieure ou égale à ladite valeur maximale à l'issue de la période de temps.

Ainsi, le procédé permet également d'effectuer un pilotage et une régulation en chauffage pièce par pièce. Cela a l'avantage d'augmenter encore la précision du pilotage et de la régulation puisque la consommation en énergie de chaque pièce est précisément calculée. D'autre part, cela permet également de réduire la consommation en énergie du local puisque toutes les pièces peuvent être à des températures différentes. Notamment, des températures de consigne peu élevées peuvent être associées à des pièces non utilisées ou moins utilisées.

Selon une réalisation, les valeurs du seuil de température intérieure *Seuil* et de la consommation d'énergie totale en usages non thermosensibles *Talon* conservent leurs valeurs respectives déterminées pour le local, le procédé comprenant en outre, au cours de la période de temps, un calcul d'un coefficient de déperditions thermiques $GV_{pièce}$ pour chacune des pièces du local, ledit calcul comprenant :

- obtenir des données historiques de la température extérieure ;

et, pour chaque pièce du local :

- obtenir des données historiques de la température intérieure mesurée et de la consommation en énergie de chauffage de ladite pièce du local ;
- calculer un écart positif $Pot_{degHPièce}$ entre la température intérieure mesurée de ladite pièce et la température extérieure à chaque pas de temps pour chaque jour passé de ladite période de temps, et
- si un nombre de jours passés, pour lesquels l'écart positif $Pot_{degHPièce}$ est supérieur à un écart maximum et pour lesquels la consommation globale en énergie de chauffage est supérieure à 0, est supérieur à un nombre de jours maximum, le coefficient de déperditions thermiques de ladite pièce $GV_{pièce}$ est calculé par régression linéaire de l'équation :

$$C^{chauffage}(pièce) = GV * (Pot_{degHPièce} - Seuil),$$

- autrement, le coefficient de déperditions thermiques $GV_{pièce}$ est calculé au moyen de l'équation :

$$GV_{pièce} = GV * Ratio_{pièce}$$

où $Ratio_{pièce}$ est choisi parmi l'un et/ou l'autre :

- le ratio d'un nombre de radiateurs dans ladite pièce du local par le nombre de radiateurs total du local ;
- le ratio d'une puissance de chauffage dans ladite pièce par une puissance de chauffage totale du logement ;
- le ratio d'une surface de ladite pièce par une surface totale du logement.

Ainsi, le recalcul du coefficient de déperdition thermique permet d'ajuster le modèle à chacune des pièces à piloter. Cela permet d'augmenter la précision et l'efficacité du procédé selon l'invention puisque la construction du modèle est faite pièce par pièce.

Le terme « pas de temps » signifie le temps entre deux itérations d'un calcul. Ainsi, l'écart positif $Pot_{degHPièce}$ est calculé, itérativement, au moins pour chaque mesure de température intérieure et chaque estimation de la température intérieure successives.

Selon une réalisation, au moins deux températures de consigne sont définies, et de préférence au moins trois températures de consigne, chaque température de consigne étant associée à une plage horaire récurrente d'un jour de la période de temps, les étapes de régulation du procédé étant effectuée pour chacune des températures de consigne, en fonction de la plage horaire dans laquelle les étapes du procédé sont mises en œuvre.

Ainsi, le procédé est particulièrement bien adapté aux cas où plusieurs températures de consigne sont reçues, que ce soit pour un pilotage du local dans sa globalité ou pièce par pièce. De plus, cela permet à un utilisateur de diminuer la valeur de la température de consigne pour une plage horaire lors de laquelle il est absent du local, par exemple. Cela entraine donc une réduction de la consommation en énergie du local.

La présente invention vise aussi un programme informatique caractérisé en ce qu'il comporte des instructions pour la mise en œuvre du procédé selon l'invention, lorsque ce programme est exécuté par un processeur.

La présente invention vise aussi un système informatique de pilotage et de régulation d'un système de chauffage d'un local, sur une période de temps, à partir d'une consigne reçue de température souhaitée définissant une température de consigne, comportant un circuit de traitement informatique pour la mise en œuvre du procédé selon l'invention.

D'autres avantages et caractéristiques de l'invention apparaitront à la lecture de la description détaillée ci-après d'exemples de réalisations de l'invention, et à l'examen des dessins annexés sur lesquels :

La figure 1 représente schématiquement un système de pilotage et de régulation d'un système de chauffage d'un local selon un exemple de réalisation,

La figure 2 est un ordinogramme des principales étapes du procédé de pilotage et de régulation d'un système de chauffage d'un local selon un exemple de réalisation,

La figure 3 est un ordinogramme des principales étapes de détermination du cas à utiliser pour calculer le coefficient de déperditions thermiques GV, le seuil de température intérieure Seuil et la consommation d'énergie totale en usages non thermosensibles *alon* ,

La figure 4 illustre le calcul du coefficient de déperditions thermiques GV, du seuil de température intérieure Seuil et du consommation d'énergie totale en usages non thermosensibles *Talon* selon le cas d'initialisation,

La figure 5 illustre le calcul du coefficient de déperditions thermiques GV, du seuil de température intérieure Seuil et du consommation d'énergie totale en usages non thermosensibles *Talon* selon un mode,

La figure 6 illustre le calcul du coefficient de déperditions thermiques GV, du seuil de température intérieure Seuil et du consommation d'énergie totale en usages non thermosensibles *Talon* selon un autre mode,

La figure 7 est un ordinogramme illustrant les principales étapes de l'estimation de la température intérieure du local,

La figure 8 est un ordinogramme des principales étapes du procédé de pilotage et de régulation d'un système de chauffage pour chaque pièce d'un local.

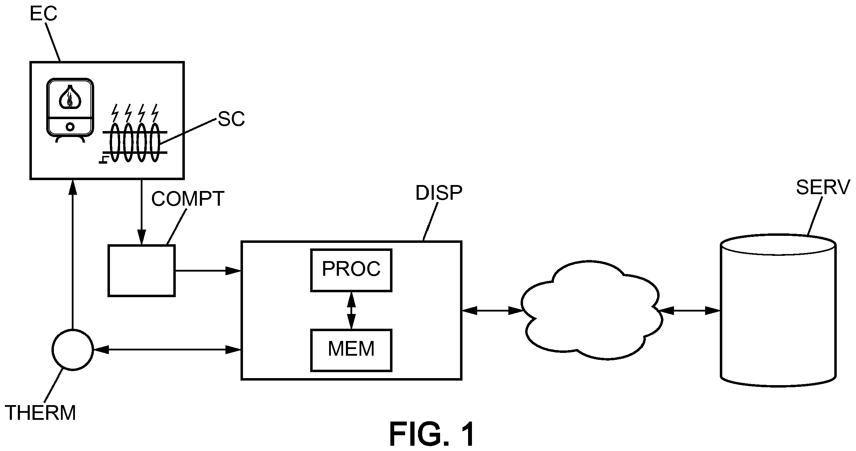

La figure 1 représente schématiquement un système SYST de pilotage et de régulation d'un système de chauffage d'un local, ou système SYST de pilotage et de régulation ou système SYST selon un exemple de réalisation. Par « local » on entend tout type d'habitation, de bureaux, d'entreprises et plus généralement toute forme de bâtiment comprenant un système de chauffage.

Le système SYST de pilotage et de régulation comprend un dispositif DISP de pilotage et de régulation, ou dispositif DISP, utilisé dans un local. Le dispositif DISP comprend notamment un processeur PROC sur lequel sont chargées des instructions permettant de mettre en œuvre les étapes du procédé décrites ci-après. Le dispositif DISP comprend en outre une mémoire MEM. Le dispositif DISP peut également comprendre une interface utilisateur (non représentée). L'interface utilisateur peut notamment comprendre un écran, un clavier etc.

En variante, le dispositif DISP est connecté à une interface utilisateur distincte, par tout moyen de connexion tel qu'une connexion sans-fil, internet, etc. L'interface utilisateur peut alors être un ordinateur, une télécommande ou encore un téléphone intelligent ou un boîtier dédié.

Le local comprend au moins un ensemble de chauffage EC. L'ensemble de chauffage EC comprend tous les dispositifs consommant de l'énergie, qui peuvent être commandés et qui servent à chauffer le local. Notamment, l'ensemble de chauffage EC comprend au moins un système de chauffage SC, par exemple un radiateur, une chaudière à gaz, à fuel ou à bois.

Selon une réalisation particulière, l'ensemble de chauffage EC peut être relié à un dispositif de mesure de la consommation d'énergie, par exemple un compteur COMPT. Le compteur COMPT peut être un compteur intelligent.

L'ensemble de chauffage EC peut également être relié à un thermostat THERM permettant, d'une part, de mesurer la température intérieure du local et, d'autre part, d'activer ou de désactiver l'un des systèmes de chauffage SC de l'ensemble de chauffage EC.

Le compteur COMPT peut être connecté au dispositif DISP. Notamment, le compteur COMPT transmet les données de consommation en énergie du local au dispositif DISP. La connexion peut être effectuée par une connexion sans-fil, par radio, par internet ou par une connexion filaire.

Le thermostat THERM peut être connecté au dispositif DISP. Le thermostat THERM transmet les données de température intérieure du local, et éventuellement les états d'activation ou de désactivation des systèmes de chauffage, au dispositif DISP. Le dispositif DISP est apte à communiquer en retour avec le thermostat THERM de manière à piloter les systèmes de chauffage SC. La connexion peut être effectuée par une connexion sans-fil, par radio, par internet ou par une connexion filaire.

Le dispositif DISP peut en outre être relié à un serveur SERV, par exemple par une connexion sans-fil de type connexion internet. Notamment, le serveur SERV peut servir à stocker les historiques de consommation en énergie du local, les températures intérieures mesurées et estimées, des prévisions météorologiques comprenant la température extérieure, etc.

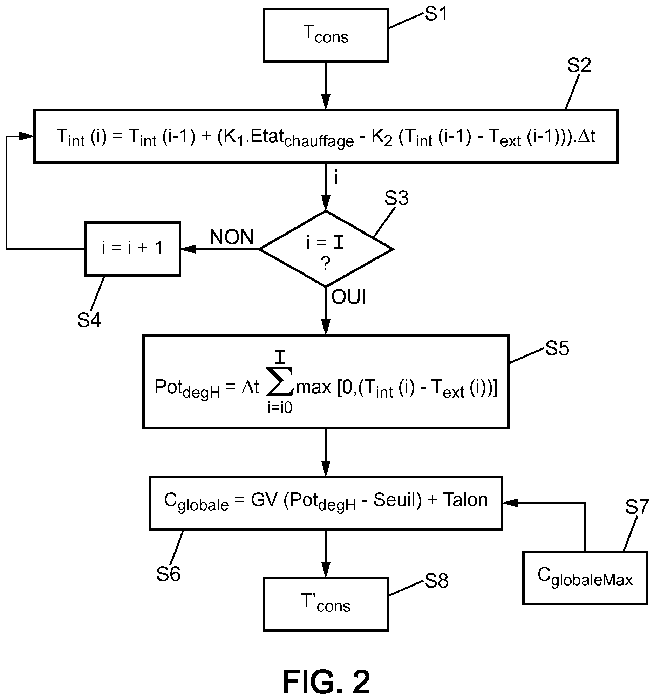

La figure 2 illustre les principales étapes du pilotage et de la régulation de systèmes de chauffage d'un local dans sa globalité sur une période de temps.

A l'étape S1, une température de consigne $T_{cons}$ est reçue. La température de consigne $T_{cons}$ peut être entrée par un utilisateur, via l'interface utilisateur par exemple. Cette température de consigne est à atteindre dans le local.

Selon une variante de réalisation non illustrée, l'utilisateur renseigne un planning horaire sur la période. Plus précisément, l'utilisateur renseigne au moins deux plages horaires et de préférence au moins trois plages horaires. Les plages horaires peuvent être définies de manière journalière, de sorte que chaque jour de la période donnée est découpé selon ces plages horaires. En variante, les plages horaires peuvent être définies hebdomadairement, de sorte que chaque semaine de la période donnée est découpée selon ces plages horaires, ou encore mensuellement. A titre indicatif, la période de temps donnée peut s'étendre de quelques semaines, à quelques mois voire quelques années.

Les plages horaires peuvent correspondre à une plage de présence, lors de laquelle l'utilisateur est présent dans le local, une plage d'absence, lors de laquelle l'utilisateur est absent du local ou une plage de réduit, par exemple lorsque l'utilisateur dort.

L'utilisateur peut associer une température de consigne à chacune de ces plages horaires. Les températures de consigne peuvent différer selon les plages horaires. Le système SYST est alors à même de construire un planning dans lequel chaque plage horaire est associée à une température de consigne à respecter.

La figure 2 présente le cas où une plage horaire n'a pas été définie, la régulation et le pilotage se font sur la base d'une unique température de consigne. Toutefois, il est entendu que les étapes décrites ci-après s'appliquent de la même façon dans le cas où un planning a été construit.

Les étapes S2 à S4 illustrent l'estimation de la température intérieure sur la période donnée. Pour calculer la prévision de température intérieure, le procédé utilise une équation d'évolution de la température intérieure en fonction des caractéristiques du bâtiment, de la température de consigne demandée et de données météorologiques (notamment la température extérieure) pouvant s'écrire comme suit :

$$T_{int}(i) = T_{int}(i - 1) + \left(K_1 * \text{État}_{chauffage} - K_2 * (T_{int}(i - 1) - T_{ext}(i - 1))\right)\Delta t$$

où :

- $T_{int}$ est la température intérieure estimée à l'itération i,
- $K_1$, $K_2$ sont des paramètres thermiques du local, représentant respectivement une remontée en température et une chute en température du local, $K_1$, $K_2$ étant obtenus à partir de données historiques du local,
- $\text{État}_{chauffage}$ est un booléen représentant un état d'activation ou de désactivation du système de chauffage,

$T_{ext}$ représente la température extérieure du bâtiment obtenue à partir de données météorologiques prévisionnelle.

L'équation ci-dessus indique que la température intérieure évolue au cours du temps, en fonction de sa valeur au pas de temps précédent, de l'état du système de chauffage (en marche ou arrêté) et de l'écart entre températures intérieure et extérieure.

L'estimation de la température intérieure Tint comprend une première itération où

$$T_{int}(i0 + 1) = T_{int}(i0) + \left(K_1 * \text{État}_{chauffage} - K_2 * (T_{int}(i0) - T_{ext}(i0))\right)\Delta t$$

où $T_{int}(i0)$ est égale à la température de consigne. Ainsi, l'estimation de la température intérieure Tint est directement corrélée à la température de consigne $T_{cons}$ reçue à l'étape S1.

La température intérieure $T_{int}$ est estimée à chaque pas de temps $\Delta t$. Selon une réalisation, le pas de temps peut être égal à 15 minutes. La prévision de la température intérieure $T_{int}$ dans le local est faite sur la période donnée. Ainsi la température intérieure $T_{int}$ est estimée à chaque pas de temps jusqu'à la fin de la période donnée où *i=I*. Les valeurs de la température intérieure $T_{int}$ sont par exemple stockées sur le serveur SERV.

Le chauffage du local est principalement lié à l'écart entre la température intérieure $T_{int}$ du local et la température extérieure $T_{ext}$, obtenue si besoin à un pas de temps égal à celui de $T_{int}$. Plus précisément, la température extérieure peut être obtenue au moyen de données météorologiques stockées sur le serveur SERV ou encore au moyen d'une sonde de température placée à l'extérieur du local et connectée au dispositif DISP.

A l'étape S5, l'écart positif $Pot_{degH}$ entre la température intérieure $T_{int}$ et la température extérieure $T_{ext}$ est calculé sur l'ensemble de la période comme suit :

$$Pot_{degH} = \Delta t \sum_{i=i0}^{I} \max[0, (T_{int}(i) - T_{ext}(i))]$$

où :

$Pot_{degH}$ représente l'écart positif entre la température intérieure estimée du local et la température extérieure sur toute la période de temps;

$T_{int}(i)$ et $T_{ext}(i)$ représentent respectivement ladite température intérieure estimée et ladite température extérieure à chaque pas de temps.

Cela permet d'obtenir, à l'étape S6 la consommation globale en énergie du local sur la période de temps en fonction de la température de consigne $T_{cons}$ reçue à l'étape S1, définie par la formule :

$$C_{globale} = GV * \left(Pot_{degH} - Seuil\right) + Talon$$

où :

$C_{globale}$ représente la prévision de consommation d'énergie globale du local sur la période de temps,

o GV représente un coefficient de déperditions thermiques du local,
o Seuil représente un seuil de température intérieure au-dessus de laquelle un système de chauffage du local est mis en état de désactivation, et
o *Talon* représente une consommation d'énergie totale en usages non thermosensibles du local, obtenue à partir de données statistiques.

Par usages non thermosensibles, on entend les usages impliquant une consommation électrique non sensible à la température. Autrement dit, la consommation électrique de ces usages ne dépend pas de la température extérieure et/ou intérieure. Ainsi, ces usages sont par exemple la cuisson, au moins une partie de l'eau chaude sanitaire,...

La construction ou élaboration du modèle prévoyant la consommation en énergie du local par rapport à une température de consigne permet, à l'inverse, d'obtenir une valeur d'une nouvelle température de consigne $T_{cons}$' en fonction d'une consommation globale maximale en énergie, souhaitée par l'utilisateur.

Les étapes S2 à S6 peuvent être réalisées sur le serveur SERV.

Ainsi, à l'étape S7, l'utilisateur peut entrer une consommation globale en énergie maximale.

A partir de cette consommation globale maximale et du modèle construit, le procédé retourne en sortie une ou plusieurs valeurs de températures de consignes $T_{cons}$'. L'utilisateur peut choisir la valeur de la température de consigne $T_{cons}$' qu'il souhaite atteindre dans le local.

En variante, la ou les températures de consignes $T_{cons}$' présentées à l'utilisateur à l'étape S8 ont été filtrées afin de présenter à l'utilisateur les valeurs se rapprochant le plus de la température de consigne $T_{cons}$ initialement reçue à l'étape S1.

Dans le cas où un planning a été créé à partir de plusieurs valeurs de consigne $T_{cons}$ chacune associée à une plage horaire distincte, autant de valeurs de consigne $T_{cons}$' sont retournées à l'étape S8. Ainsi, si l'utilisateur a défini trois plages horaires associées respectivement à une température de consigne $T_{cons}$, un triplet de température $T_{cons}$' est retourné à l'étape S8. L'utilisateur peut alors faire son choix entre les différents triplets de températures.

La détermination de la température de consigne $T_{cons}$' peut être effectuée en local. Par exemple, le dispositif DISP détermine cette température de consigne.

Ainsi, la construction du modèle de prévision de la consommation globale en énergie est réalisée sur le serveur SERV et la détermination d'une température de consigne $T_{cons}$' est réalisée en local sur le dispositif DISP. Cela permet de réaliser les opérations nécessitant davantage de ressources en calculs à distance, de manière à ne pas surcharger le dispositif DISP, tandis que les opérations plus simples sont réalisées en local de manière à diminuer le temps de latence dû aux échanges de données entre le serveur SERV et le dispositif DISP.

La ou les températures de consigne $T_{cons}$' retenues par l'utilisateur sont envoyées au thermostat THERM. Le dispositif DISP se charge de piloter et réguler les systèmes de chauffage SC afin que la température intérieure Tint du local atteigne la température de consigne $T_{cons}$'.

De manière plus précise, la réussite du modèle de prévision de la consommation globale en énergie repose sur une connaissance précise et personnalisée, en fonction du local notamment, des paramètre thermiques $K_1$, $K_2$ (appelés paramètres dynamiques dans la suite de la description) ainsi que du coefficient de déperditions thermiques GV, du seuil de température intérieure Seuil et de la consommation d'énergie totale en usages non thermosensibles *Talon* (appelés paramètres statiques dans la suite de la description).

Les paramètres dynamiques $K_1$, $K_2$ permettent d'estimer, à partir d'une température de consigne $T_{cons}$ et d'une température extérieure $T_{ext}$, l'évolution dynamique de la température intérieure $T_{int}$.

Ces paramètres sont nommés «remontée en température » et « chute en température » et peuvent être calculés par simple régression linéaire sur la base de données historique du local. Notamment, les données historiques du local peuvent correspondre aux estimations de la température intérieure $T_{int}$, la température de consigne $T_{cons}$ et l'évolution de la température extérieure $T_{ext}$ sur au moins une partie de la période de temps. Ces données historiques peuvent être stockées dans le serveur SERV. Ainsi, et pour assurer la cohérence du modèle, il apparaît que les équations utilisées pour estimer la température intérieure Tint et les paramètres dynamiques $K_1$, $K_2$ sont les mêmes.

Lorsqu'aucun historique n'est disponible, on peut fixer les paramètres à des valeurs par défaut, qui correspondent à un comportement d'un bâtiment moyen. Dans ce mode de réalisation, on prend par exemple comme valeurs par défaut $K_1$=1.5 et $K_2$=-0.05.

Les paramètres statiques permettent d'estimer une consommation globale d'énergie nécessaire au respect d'une température de consigne connue. Comme dit plus haut, les paramètres statiques comprennent : le niveau de déperditions du local GV, la consommation en énergie des usages non thermosensibles Talon, s'exprimant en kWh, et la température intérieure (ou l'écart entre températures intérieure et extérieure) Seuil au-dessous de laquelle les besoins de chauffage sont nuls ou négligeables. Plus la valeur de GV est élevée, plus il faudra de l'énergie pour maintenir le local à une température choisie.

Les paramètres statiques peuvent être calculés à partir des données d'historique du local, pouvant être stockées dans le serveur SERV. Plus précisément, le calcul des paramètres statiques peut être effectué par régression linéaire de l'équation

$$C_{globale} = GV * \left(Pot_{degH} - Seuil\right) + Talon$$

et en utilisant les données d'historiques.

Si les données d'historique ne sont pas suffisantes, des valeurs par défaut peuvent être utilisées. Ces valeurs sont par exemple calculées à partir d'un logiciel de simulation thermique et/ou d'un questionnaire renseigné par l'utilisateur sur le local.

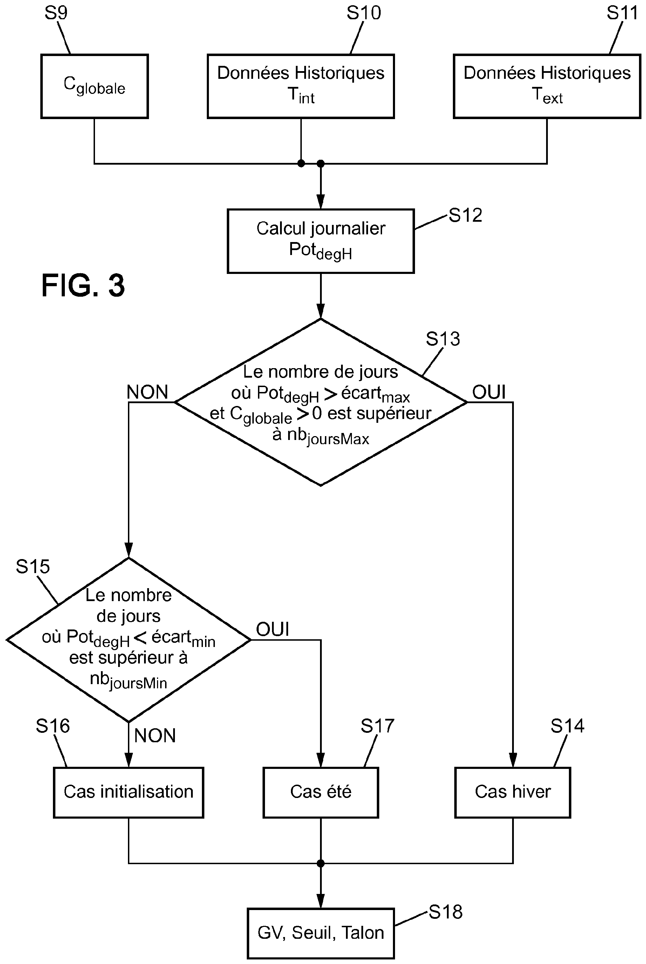

La figure 3 est un ordinogramme illustrant les principales étapes d'un procédé permettant de déterminer quelles valeurs des paramètres statiques sont à utiliser.

Aux étapes S9 à S11, les données historiques de la consommation globale en énergie, de la température intérieure $T_{int}$ mesurée du local et de la température extérieure $T_{ext}$ sont obtenues. Ces données historiques sont obtenues pour chaque jour passé d'au moins une partie de la période de temps.

A partir de ces données, l'écart positif $Pot_{degH}$ entre la température intérieure $T_{int}$ du local et la température extérieure $T_{ext}$, à chaque pas de temps pour chaque jour passé de la période de temps est calculé à l'étape S12.

A l'étape S13, le nombre de jours où l'écart positif $Pot_{degH}$ est strictement supérieur à un écart positif maximal, et où la consommation globale en énergie est supérieure à zéro est dénombré. Si ce nombre de jours est supérieur à un nombre de jours maximal, prédéfini, les paramètres statiques sont calculés selon un premier mode, appelé « mode hiver » à l'étape S14.

Autrement, il est déterminé à l'étape S15 si un nombre de jours où l'écart positif $Pot_{degH}$ est strictement inférieur à un écart minimum est supérieure à un nombre de jours minimum, prédéfini. Si c'est le cas, les paramètres statiques sont calculés selon un deuxième mode, appelé « mode été » à l'étape S17. Si ce n'est pas le cas, les paramètres statiques sont calculés selon un mode « initialisation ». A l'étape S18, les valeurs des paramètres statiques GV, Seuil et Talon sont retournés.

Selon un exemple de réalisation, l'écart minimum est égale à 48°C.h, l'écart maximal est égal à 192°C.h, le nombre de jours minimum est égal à 5jours et le nombre de jours maximal est égal à 20jours.

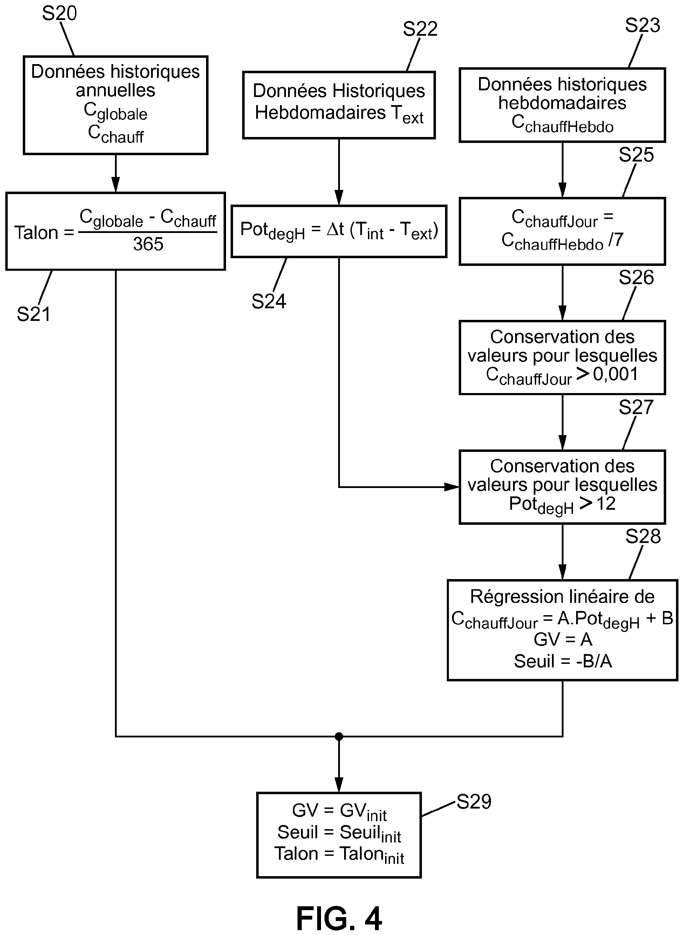

Les figures 4 à 6 sont des ordinogrammes illustrant les étapes permettant de calculer les paramètres statiques respectivement selon le mode « initialisation », « été » et « hiver ».

Pour le mode « initialisation » des paramètres statiques, le procédé utilise par exemple un « profil utilisateur », qui permet de déterminer à gros traits les caractéristiques du local et de sa consommation en énergie. Ce profil peut être renseigné par l'utilisateur au moyen d'une série de questions (par exemple l'année de construction du logement, la surface, le nombre d'occupants, le type de système de chauffage, le type de système de production d'Eau Chaude Sanitaire). Le profil peut être plus ou moins détaillé, pour améliorer la précision des estimations.

Selon une première variante, décrite à la figure 4, le profil client est injecté dans un logiciel de simulation thermique.

La valeur initialisée de Talon est calculée à partir des données historiques annuelles de la consommation globale en énergie et de la consommation en chauffage du local obtenues à l'étape S20. La différence entre ces deux consommations divisée par le nombre de jours sur l'année (365) permet d'obtenir la valeur de Talon à l'étape S21.

Aux étapes S22 et S23, les données historiques d'une consommation de chauffage hebdomadaire et d'une température extérieure moyenne pour N sous-périodes, chacune d'une durée d'une semaine, sont obtenues.

Puis, pour chaque sous-période N d'une semaine, l'écart positif $Pot_{degH}$ est calculé à l'étape S24, en prenant comme valeur de la température intérieure 20°C et un pas de temps égale à 24h, de sorte que l'écart positif $Pot_{degH}$ est obtenu pour un jour représentatif de chaque sous-période N d'une semaine.

Puis, la consommation en chauffage journalière moyenne est obtenue à partir de la consommation en chauffage hebdomadaire à l'étape S25. Aux étapes S26 et S27, seules les valeurs de la consommation en chauffage hebdomadaire supérieures à 0.001 et les valeurs de l'écart positif $Pot_{degH}$ supérieures à 12 sont conservées de manière à ne pas fausser les résultats.

A l'étape S28, les valeurs du niveau de déperditions thermiques GV et de Seuil sont obtenues par régression linéaires de l'équation :

$$C_{chauffJour} = A * Pot_{DegH} + B,$$

où GV = A et Seuil = -B/A.

Les valeurs des paramètres statiques GV, Seuil et Talon du mode « initialisation » sont obtenues à l'étape S29.

Selon une deuxième variante de réalisation non représentée, les valeurs des paramètres statiques GV, Seuil et Talon du mode « initialisation » sont obtenues au moyen d'une base de données issue d'une simulation thermique ou d'une analyse statistiques des données de l'utilisateur.

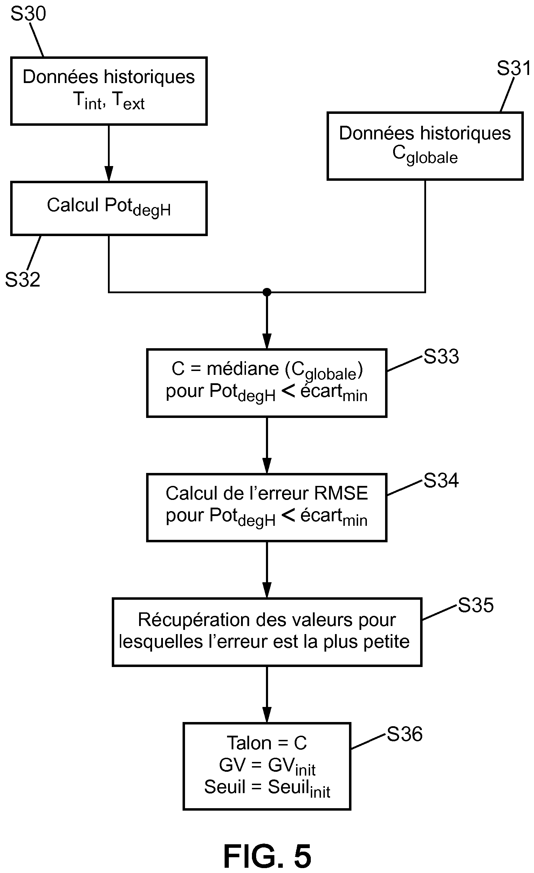

La figure 5 illustre le calcul des paramètres statiques dans le mode « été ».

Aux étapes S30 et S31, les données historiques de la température intérieure $T_{int}$ mesurée, de la température extérieure $T_{ext}$ et de la consommation globale journalière sont obtenues.

L'écart entre la température intérieure $T_{int}$ et la température extérieure $T_{ext}$ est calculé à l'étape S32. Puis, à l'étape S33, le calcul de la médiane C des consommations globales journalières pour les jours pour lesquels l'écart entre la température intérieure $T_{int}$ et la température extérieure $T_{ext}$ est inférieur à l'écart minimum est effectué. L'erreur quadratique moyenne RMSE est calculée pour ces mêmes jours selon la formule :

$$RMSE = \sqrt{\frac{\sum_{i=1}^{N}\left(C_{globale}[i] - C\right)^2}{N}}$$

Où N est le nombre de jours pour lesquels l'écart entre la température intérieure $T_{int}$ et la température extérieure $T_{ext}$ est inférieur à l'écart minimum.

A l'étape S35, les valeurs de l'erreur RMSE et de la médiane C associées à l'écart minimum sont retournées.

Les étapes S33 à S35 peuvent être répétées pour différentes valeurs de l'écart minimum. Par exemple, à chaque nouveau calcul, l'écart minimum est augmenté ou diminué d'un pas de 12°C.h, avec un écart minimum compris entre 48 et 192°C.h. De cette manière, une pluralité de triplets de valeurs (RMSE, C, écart minimum) est obtenue à l'étape S35.

A l'étape S36, le paramètre statique Talon prend la valeur de la médiane C du triplet pour lequel l'erreur RMSE est la plus petite. Les paramètres statiques GV et Seuil prennent les valeurs des paramètres statiques initialisés, calculés à la figure 4.

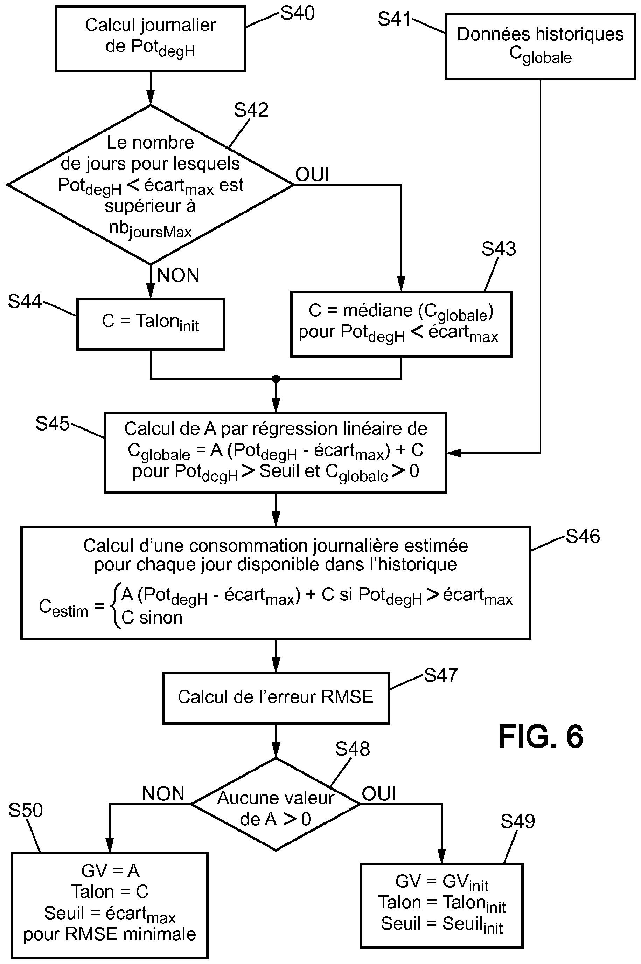

La figure 6 illustre calcul des paramètres statiques dans le mode « hiver ».

A l'étape S40, l'écart positif $Pot_{degH}$ journalier est calculé en fonction des données historiques des températures intérieures et extérieures. A l'étape S41, les données historiques journalières de la consommation globale en énergie $C_{globale}$ sont obtenues.

A l'étape S42, il est déterminé si le nombre de jours pour lesquels l'écart positif $Pot_{degH}$ est inférieur à l'écart maximal est supérieur à un nombre de jours maximum. Si c'est le cas, le coefficient C prend la valeur de la médiane de la consommation globale en énergie pour les jours pour lesquels l'écart positif $Pot_{degH}$ est inférieur à l'écart maximal, comme illustré à l'étape S43. Autrement, le coefficient C prend la valeur du paramètre statique Talon initialisé (étape S44).

A l'étape S45 a lieu le calcul d'un coefficient A par régression linéaire de l'équation

$$\left(C_{globale} - C\right) = A * \left(Pot_{DegH} - Seuil\right)$$

Pour les jours où l'écart positif $Pot_{degH}$ est supérieur à l'écart minimum et où la consommation globale est supérieure à zéro.

A l'étape S46 a lieu le calcul d'une consommation en énergie journalière estimée $C_{estim}$, pour chaque jour disponible des données historiques du local, telle que :

$$C_{estim} = \begin{cases} A * \left(Pot_{DegH} - Seuil\right) + C \text{ si } Pot_{DegH} > Seuil \\ C \text{ sinon} \end{cases}$$

A l'étape S47, l'erreur RMSE est calculée pour chaque jour disponible telle que :

$$RMSE = \sqrt{\frac{\sum_{i=1}^{N}(C_{reelle}[i] - C_{estim}[i])^2}{N}}$$

Les valeurs du quadruplet (écart minimum, A, C et RMSE) sont retournées.

Les étapes S42 à S47 décrites ci-avant peuvent être répétées pour différentes valeurs de l'écart minimum. Par exemple, à chaque itération de ces étapes la valeur de l'écart minimum augmente ou diminue d'un pas de 12 °C.h, avec l'écart minimum compris entre 48°C.h et 192°C.h. Ainsi, une pluralité de quadruplets (écart minimum, A, C et RMSE) est retournée à l'étape S47.

A l'étape S48, il est identifié si, parmi la pluralité de quadruplets retournés à l'étape S47, il existe au moins un quadruplet donc une valeur du coefficient A est positive. Si c'est le cas, il est déterminé quelles sont les valeurs des coefficients A, C et de l'écart minimum pour lesquelles l'erreur RMSE est la plus petite. A l'étape S50, les paramètres statiques prennent respectivement les valeurs :

GV=A
Talon = C,
Seuil = écart minimum.

Si ce n'est pas le cas, les paramètres statiques GV, Talon et Seuil conservent les valeurs du mode « initialisation » décrit en référence à la figure 4 (étape S49).

Une fois calculés, les paramètres statiques GV, Talon et Seuil peuvent ne plus l'être. Par exemple, on peut prévoir de calculer à nouveau ces paramètres lors d'un changement d'utilisateur du local, ou encore lors d'un changement de mode de consommation d'énergie par exemple.

Le calcul de ces paramètres est particulièrement avantageux puisqu'il est fait à partir de données historiques. Les valeurs des paramètres statiques sont donc directement corrélées à la consommation en énergie réelle de l'utilisateur. D'autre part, l'initialisation de ces valeurs permet au procédé d'être directement opérationnel.

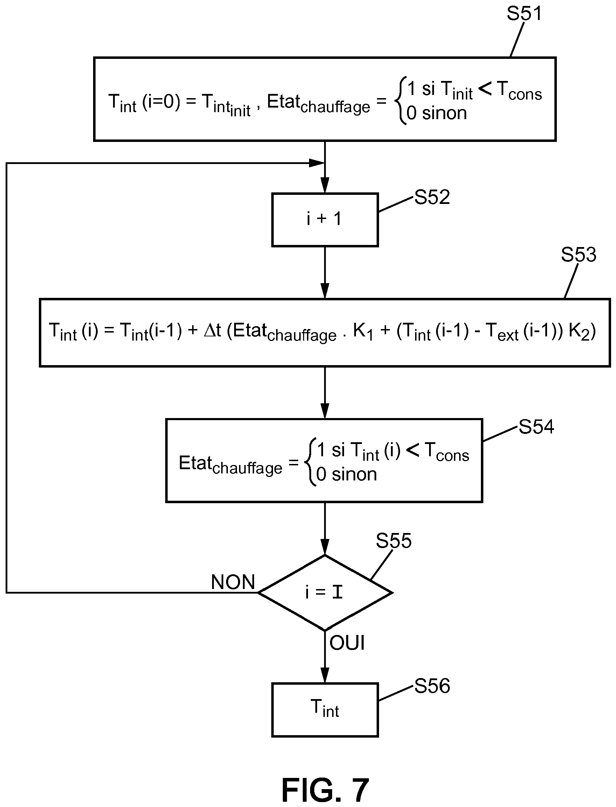

La figure 7 illustre de manière plus précise l'estimation de la température intérieure Tint à partir d'au moins une température de consigne.

La prévision de température intérieure Tint permet de passer d'une température de consigne souhaitée à une température intérieure respectant cette température de consigne. Dans le cas où l'utilisateur a défini un planning de contraintes dans lequel plusieurs plages horaires sont respectivement associées à une température de consigne, la prévision de la température intérieure Tint permet de respecter ces températures de consigne durant la plage horaire associée.

On décrit ci-après le cas où une unique température de consigne est reçue. Toutefois, les étapes décrites ci-après s'appliquent au cas où plusieurs températures de consigne sont reçues.

Afin d'effectuer l'estimation de la température intérieure $T_{int}$, la température de consigne $T_{cons}$ est reçue. Les prévisions de la température extérieure $T_{ext}$ sur la période de temps sont également reçues. Par exemple, ces prévisions sont reçues à partir du serveur SERV qui a accès aux prévisions météorologiques de la période donnée. Ces données sont par exemple reçues à chaque pas de temps, par exemple égal à 15 minutes.

Les valeurs des paramètres dynamiques $K_1$, $K_2$ sont également reçues. Enfin, une température intérieure initiale peut être reçue. Cette valeur correspond par exemple à une température intérieure mesurée par le thermostat. En variante, il est possible de prendre une température intérieure par défaut, par exemple égale à 20°C. En variante, il est également possible de prendre une température intérieure initiale égale à la température de consigne $T_{cons}$.

L'estimation comprend le calcul successif, à chaque pas de temps, d'une valeur Tint, qui représente l'estimation de la température intérieure, et une valeur Etat$_{chauffage}$, qui représente l'état du système de chauffage (1 si Marche ou 0 si Arrêt) à chaque pas de temps. L'estimation de la valeur de $T_{int}$ à chaque pas de temps i s'effectue à partir des données $T_{int}$ et Etat$_{chauffage}$ du pas de temps précédent (*i-1*), des données de la température de consigne $T_{cons}$ et de la température extérieure $T_{ext}$ au pas de temps *i* et des valeurs des paramètres dynamiques $K_1$, $K_2$.

Ainsi, l'étape S51 illustre l'initialisation des différents paramètres utiles à l'estimation de la température intérieure Tint. La température intérieure Tint au pas de temps i=0 est égale à la température intérieure initiale, et le booléen Etat$_{chauffage}$ est forcé à 1 si la température intérieure initiale est inférieure à la température de consigne $T_{cons}$ et à 0 sinon.

A l'étape S52, le pas de temps est incrémenté de 1. L'étape S53 comprend alors l'estimation de la température intérieure $T_{int}$ au pas de temps suivant i+1. Puis à l'étape S54, il est déterminé si la température intérieure au pas de temps i+1 est inférieure à la température de consigne. Si tel est le cas, le booléen Etat$_{chauffage}$ est forcé à 1, sinon il est forcé à 0. Tant que le pas de temps est inférieur au pas de temps illustrant la fin de la période de temps, les étapes sont répétées en incrémentant systématiquement de 1 le pas de temps. A la fin de la période de temps (étape S56), le procédé est stoppé. La température intérieure estimée Tint à chaque pas de temps est retournée en sortie. Grâce à cette estimation de la température intérieure sur toute la période de temps, il est possible de construire le modèle de consommation d'énergie tel que décrit en référence à la figure 2.

Le procédé selon l'invention permet en outre de piloter et de réguler un système de chauffage de pièces d'un local, indépendamment les unes des autres.

Dans ce mode de réalisation, plusieurs températures de consigne $T_{cons}$, respectivement associées à une pièce du local sont définies. Le modèle de prévision de la consommation d'énergie globale peut être appliqué à chacune des pièces du local, en fonction de la température de consigne $T_{cons}$ associée à cette pièce. Une valeur maximale de la consommation d'énergie globale peut être définie, de sorte qu'à partir du modèle de prévision, le procédé permet de retourner en sortie de nouvelles températures de consigne $T_{cons}$, respectivement associées à une pièce du local.

Afin de maintenir un degré de précision élevée, les paramètres statiques GV et Seuil peuvent être recalculés localement, c'est-à-dire pour chaque pièce. Le paramètre statique Talon n'est pas à recalculer puisqu'il représente la consommation en énergie du local des usages non-thermosensibles.

Selon une réalisation, le paramètre $Seuil_{pièce}$ de chaque pièce est égal au paramètre Seuil calculé pour le local.

Selon une autre réalisation, le paramètre $Seuil_{pièce}$ de chaque pièce est obtenu par régression linéaire, tel que décrit ci-avant. Dans ce cas, le paramètre Talon est fixé à zéro.

Le calcul du paramètre $GV_{pièce}$ est décrit ci-après pour une seule pièce. Il est entendu que ce calcul est fait pour chacune des pièces du local pouvant être pilotée au moyen du dispositif DISP.

Selon une première variante de réalisation, le paramètre $Ratio_{pièce}$ est calculé. Selon une réalisation, ce peut être le ratio du nombre de systèmes de chauffage (par exemple le nombre de radiateurs) présent dans la pièce par le nombre de systèmes de chauffage total dans le local.

En variante, ce peut être le ratio de la surface de la pièce par rapport à la surface totale du local.

Selon une autre variante, ce peut être le ratio de la puissance du chauffage installé dans la pièce par rapport à la puissance du chauffage installé dans le local.

Ce paramètre est un indicateur sommaire des besoins de chauffage de la pièce, relativement à tout le local.

Le paramètre statique $GV_{pièce}$ est calculé comme étant le produit du paramètre statique GV du local par le paramètre $Ratio_{pièce}$.

Selon une deuxième variante de réalisation, le paramètre statique $GV_{pièce}$ de la pièce est calculé par régression linéaire sur les données historiques journalières selon l'équation :

$$C_{chauffPièce} = GV * \left(Pot_{degHPièce} - Seuil\right)$$

Pour les jours où l'écart positif journalier $Pot_{degHPièce}$ pour la pièce est supérieur au paramètre statique Seuil du local.

Les deux variantes de réalisation sont l'une ou l'autre mises en œuvre en fonction de certaines conditions.

Ainsi, pour déterminer quelle variante de réalisation mettre en œuvre, un dénombrement du nombre de jours pour lesquels l'écart positif $Pot_{degH}$ du logement est strictement supérieur à l'écart maximum, par exemple égal à 192°C.h et pour lesquels la consommation globale du local est supérieure à 0. Si le nombre de jours est supérieurs à un nombre de jours maximal, par exemple égal à 20 jours, alors la deuxième variante de réalisation est utilisée. Autrement, la première variante de réalisation est utilisée.

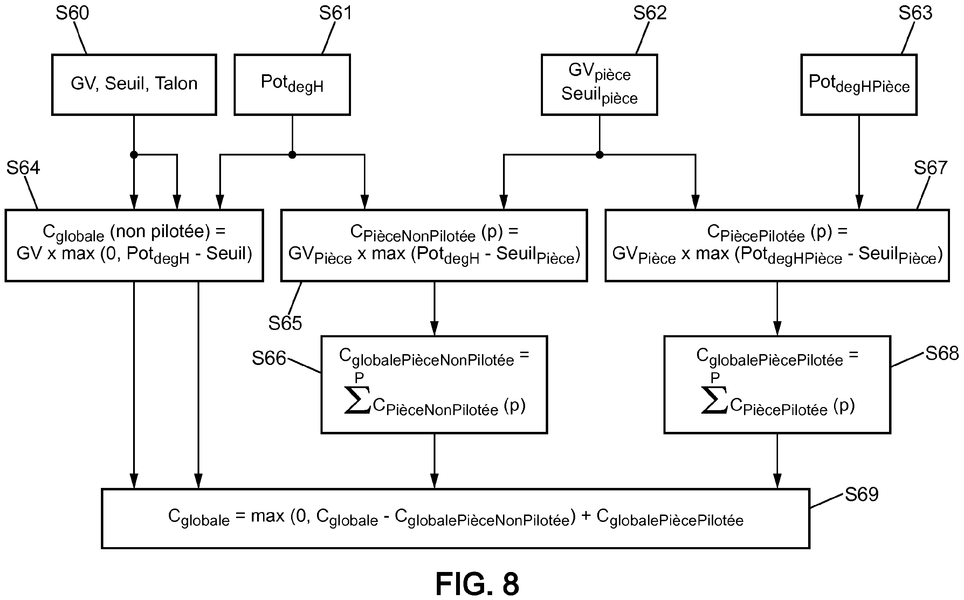

La figure 8 est un ordinogramme illustrant les principales étapes du procédé de pilotage et de régulation pièce par pièce, dans le cas où le local comprend des pièces pilotables et des pièces non pilotables.

Par « non-pilotables » on entend des pièces munies d'un système de chauffage ne pouvant pas être piloté au moyen du dispositif DISP. Afin de résoudre ce problème, il est possible de définir deux sous-locaux fictifs.

Un premier sous-local est défini comme comprenant une température intérieure identique pour toutes les pièces. La température intérieure peut être calculée comme la moyenne des températures intérieures mesurées par le thermostat sur une sous-période de temps par exemple égale à une semaine. Ce premier sous-local est le local non-pilotable.

Le deuxième sous-local est un local piloté pour lequel la température intérieure de chacune des pièces est directement liée à la température de consigne $T_{cons}$ souhaitée.

Ci-après on décrit un exemple de réalisation dans lequel un local comprend N pièces dont seulement P pièces sont pilotables, avec P égal ou inférieur à N.

Pour chaque pièce pilotable p, il est possible de calculer la consommation de chauffage pour la pièce p, sachant qu'elle est pilotée. Dans ce cas la température intérieure peut varier en fonction de la température de consigne $T_{cons}$ souhaitée dans cette pièce. Il est également possible de calculer la consommation de chauffage pour la pièce p, en supposant qu'elle n'est pas pilotée. Dans ce cas, la température intérieure est constante et identique pour toutes les pièces. Enfin, il est possible de calculer la consommation de chauffage pour tout le local, en supposant qu'aucune pièce n'est pilotée. Cela est possible grâce aux coefficients statiques $GV_{pièce}$ et $Seuil_{pièce}$ de chaque pièce, ainsi qu'aux coefficients statiques du local GV et Seuil.

Il est donc possible d'écrire :

$$C^{chauffage}(Local) = C_{pilotée}^{chauffage}(Pièces\ pilotées) + C_{nonpilotée}^{chauffage}(Pièces\ non\ pilotées)$$

Et

$$C^{chauffage}\ (Local\ non\ pilot\acute{e}) =$$

$$C^{chauffage}_{nonpilot\acute{e}e}\ (Pi\grave{e}ces\ pilot\acute{e}es) + C^{chauffage}_{nonpilot\acute{e}e}\ (Pi\grave{e}ces\ non\ pilot\acute{e}es)$$

Soit

$$C^{chauffage}\ (Local) = \sum_{i=1}^{P} C^{chauffage}_{pilot\acute{e}e}\ (i) + \sum_{i=P+1}^{N} C^{chauffage}_{nonpilot\acute{e}e}\ (i)$$

et

$$C^{chauffage}\ (Local\ non\ pilot\acute{e}) = \sum_{i=1}^{P} C^{chauffage}_{nonpilot\acute{e}e}\ (i) + \sum_{i=P+1}^{N} C^{chauffage}_{nonpilot\acute{e}e}\ (i)$$

Ainsi, en substituant le même terme dans les deux équations on obtient :

$$C^{chauffage}\ (Local)$$

$$= \sum_{i=1}^{P} C^{chauffage}_{pilot\acute{e}e}\ (i) + C^{chauffage}\ (Local\ non\ pilot\acute{e}) - \sum_{i=1}^{P} C^{chauffage}_{nonpilot\acute{e}e}\ (i)$$

Afin de déterminer la consommation de chauffage du local la même approche que celle décrite en référence aux figures précédentes est utilisée.

Aux étapes S60, S61 et S62, les paramètres GV, Seuil, Talon, $Pot_{degH}$, $GV_{pièce}$, $Seuil_{pièce}$ et $Pot_{degHPièce}$ sont reçus. L'écart positif $Pot_{degH}$ du local est calculé quotidiennement, en prenant comme valeur de la température intérieure $T_{int}$ une valeur unique, choisie parmi la moyenne des températures intérieures mesurées par un capteur dans les pièces équipées d'un tel capteur sur une sous-période de temps, par exemple une semaine, ou une valeur par défaut, par exemple 20°C, ou encore la moyenne de la température intérieure mesurée dans une seule pièce sur une sous-période de temps, par exemple une semaine.

L'écart positif par pièce $Pot_{degHPièce}$ est calculé pour chaque pièce, à partir de la température intérieure estimée, basée sur la température de consigne $T_{cons}$. Pour une pièce p donnée, l'écart positif $Pot_{degHPièce}$ est calculé en récupérant la température de consigne $T_{cons}$ de cette pièce puis en estimant la température intérieure répondant à cette consigne.

A partir des valeurs des écarts positifs $Pot_{degHPièce}$ et $Pot_{degH}$ ainsi que des paramètres statiques GV, $GV_{pièce}$, Seuil, $Seuil_{pièce}$ et Talon, il est possible d'estimer les consommations de chauffage pour un jour j selon les formules suivantes :

$$C^{chauffage}(Local\ non\ pilot\acute{e}, j) = GV * max\left(0;\ \left(Pot_{degH}(j) - Seuil\right)\right)$$

$$C^{chauffage}_{pilot\acute{e}e}(pi\grave{e}ce\ p, j) = GV_{pi\grave{e}ce}(p) * max\left(0;\ \left[Pot_{pi\grave{e}ce}(p, j) - Seuil_{pi\grave{e}ce}(p)\right]\right)$$

$$C^{chauffage}_{non\ pilot\acute{e}e}(pi\grave{e}ce\ p, j) = GV_{pi\grave{e}ce}(p) * max\left(0;\ \left[Pot_{degH}(j) - Seuil_{pi\grave{e}ce}(p)\right]\right)$$

Ces formules correspondent respectivement aux étapes S64, S65 et S66.

Afin d'obtenir les consommations en chauffage $C^{chauffage}_{pilot\acute{e}e}$ et $C^{chauffage}_{non\ pilot\acute{e}e}$ pour toutes les pièces, la somme de chacune de ces consommations en chauffage est effectuée respectivement aux étapes S66 et S68.

L'étape S69, la consommation en chauffage global du logement est obtenue selon la formule

$$C^{chauffage}(Locall)$$

$$= \sum_{i=1}^{P} C_{pilotée}^{chauffage}(i) + C^{chauffage}(Local\ non\ piloté) - \sum_{i=1}^{P} C_{nonpilotée}^{chauffage}(i)$$

**Revendications**

1. Procédé, mis en œuvre par des moyens informatiques, de pilotage et de régulation d'un système de chauffage d'un local, sur une période de temps, à partir d'une consigne reçue de température souhaitée définissant une température de consigne ($T_{cons}$), le procédé comportant les étapes :

   - élaborer un modèle de prévision d'une consommation d'énergie globale du local permettant de maintenir une température intérieure (Tint) du local égale à la température de consigne ($T_{cons}$) sur ladite période de temps, ledit modèle s'exprimant comme fonction de la température de consigne ($T_{cons}$) par une équation :

   $$C_{globale} = GV * (Pot_{degH} - Seuil) + Talon$$

   où :

   - ◦ $C_{globale}$ représente la prévision de consommation d'énergie globale du local sur la période de temps,
   - o GV représente un coefficient de déperditions thermiques du local,
   - o $Pot_{degH}$ représente un écart positif entre une température intérieure (Tint) estimée du local, et une température extérieure ($T_{ext}$), ladite température intérieure (Tint) estimée dépendant de la température de consigne ($T_{cons}$), et ledit écart positif étant calculé à chaque pas d'un temps sur la période de temps,
   - o Seuil représente un seuil de température intérieure (Tint) au-dessus de laquelle un système de chauffage du local est mis en état de désactivation, et
   - o *Talon* représente une consommation d'énergie totale en usages non thermosensibles du local, obtenue à partir de données statistiques ;

   - puis, définir une valeur maximale de la consommation d'énergie globale sur la période de temps, **caractérisé en ce que** le procédé comprend l'étape:
   à partir du modèle de prévision de la consommation d'énergie globale du local :
   o obtenir en sortie une nouvelle température de consigne ($T_{cons}$') à atteindre dans le local de sorte que la valeur de la consommation d'énergie globale du local est inférieure ou égale à ladite valeur maximale à l'issue de la période de temps, 29
   - le procédé comprenant une autre étape d'envoi de la nouvelle température de consigne ($T_{cons}$') à un thermostat permettant le pilotage et la régulation du système de chauffage, en outre le modèle de prévision de la consommation d'énergie est élaboré en calculant itérativement la température intérieure (Tint) du local à partir de paramètres thermiques ($K_1$, K2) du local, la température extérieure ($T_{ext}$) et la température intérieure (Tint) calculée à l'itération précédente.

2. Procédé selon la revendication 1, dans lequel une construction du modèle comprend une étape préalable de :

   - une estimation de la température intérieure (Tint) du local, l'estimation étant effectuée itérativement à chaque pas de temps $\Delta t$, ladite estimation étant exprimée par :

   $$T_{int}(i) = T_{int}(i-1) + (K_1 * État_{chauffage} - K_2 * (T_{int}(i-1) - T_{ext}(i-1)))\Delta t$$

   où :

   - ◦ $T_{int}$ est la température intérieure (Tint) estimée à l'itération *i*,

○ $K_1$, $K_2$ sont des paramètres thermiques du local, représentant respectivement une remontée en température et une chute en température du local, $K_1$, $K_2$ étant obtenus à partir de données historiques du local,
○ $État_{chauffage}$ est un booléen représentant un état d'activation ou de désactivation du système de chauffage,
○ $T_{ext}$ représente la température extérieure ($T_{ext}$) du bâtiment obtenue à partir de données météorologiques prévisionnelles ;

avec une première itération où une valeur de la température initiale $T_{int}(i0)$ est choisie parmi l'une et/ou l'autre de :

○ une température par défaut,
○ la température de consigne ($T_{cons}$),
○ une température mesurée ;

et
- une détermination d'un écart positif entre la température intérieure (Tint) estimée du local et la température extérieure ($T_{ext}$) à chaque pas de temps est donnée par :

$$Pot_{degH} = \Delta t \sum_{i=i0}^{I} \max\left[0, (T_{int}(i) - T_{ext}(i))\right]$$

où :

○ $Pot_{degH}$ représente l'écart positif entre la température intérieure (Tint) estimée du local et la température extérieure ($T_{ext}$) sur toute la période de temps;
○ $T_{int}(i)$ et $T_{ext}(i)$ représentent respectivement ladite température intérieure (Tint) estimée et ladite température extérieure ($T_{ext}$) à chaque pas de temps.

**3.** Procédé selon la revendication 2, dans lequel à chaque pas de temps, une comparaison entre la valeur de la température intérieure (Tint) estimée et la valeur de la température de consigne ($T_{cons}$) est effectuée et, si la valeur de la température estimée à ce pas de temps est supérieure ou égale à la valeur de la température de consigne ($T_{cons}$) :

- le booléen $État_{chauffage}$ est forcé à zéro.

**4.** Procédé selon l'une des revendications 2 à 3, dans lequel à chaque pas de temps, une comparaison entre la valeur de la température intérieure (Tint) estimée et la valeur de la température de consigne ($T_{cons}$) est effectuée et, si la valeur de la température estimée à ce pas de temps est inférieure à la valeur de la température de consigne ($T_{cons}$) :

- le booléen $État_{chauffage}$ est forcé à 1.

**5.** Procédé selon l'une des revendications 2 à 4, dans lequel le procédé comprend une étape d'initialisation des valeurs du coefficient de déperditions thermiques GV, du seuil de température intérieure (Tint) Seuil et de la consommation d'énergie totale en usages non thermosensibles *Talon* au moyen d'une simulation thermique du local permettant de générer des données de consommation en énergie estimées, lesdites valeurs initialisées des paramètres GV, Seuil et *Talon* étant injectées dans ledit modèle de prévision.

**6.** Procédé selon la revendication 4, **caractérisé en ce que**, au cours de la période de temps, les valeurs du coefficient de déperditions thermiques GV, du seuil de température intérieure (Tint) Seuil et de la consommation d'énergie totale en usages non thermosensibles *Talon* sont recalculés, le recalcul comprenant :

- obtenir des données historiques de la température intérieure (Tint) mesurée, de la température extérieure ($T_{ext}$) et de la consommation globale en énergie de chauffage,
- calculer l'écart positif $Pot_{degH}$ entre la température intérieure (Tint) mesurée du local et la température extérieure ($T_{ext}$), à chaque pas de temps pour chaque jour passé de la période de temps, et
- si un nombre de jours passés, pour lesquels l'écart positif $Pot_{degH}$ est supérieur à un écart maximum et pour lesquels la consommation globale en énergie est supérieure à 0, est supérieur à un nombre de jours maximum, le coefficient de déperditions thermiques GV, le seuil de température intérieure (Tint) Seuil et la consommation d'énergie totale en usages non thermosensibles *Talon* sont calculés selon un premier mode, ou
- si un nombre de jours passés, pour lesquels l'écart positif $Pot_{degH}$ est inférieur à un écart minimum, est supérieur à un nombre de jours minimum, le coefficient de déperditions thermiques GV, le seuil de température intérieure (Tint) Seuil et la consommation d'énergie totale en usages non thermosensibles *Talon* sont calculés selon un deuxième mode,
- autrement, le coefficient de déperditions thermiques GV, le seuil de température intérieure (Tint) Seuil et la consommation d'énergie totale en usages non thermosensibles *Talon* conservent leurs valeurs respectives déterminées lors de l'étape d'initialisation.

7. Procédé selon l'une des revendications 1 à 6, **caractérisé en ce qu'**il comprend :

   - définir plusieurs températures de consigne respectivement associées à une pièce du local parmi une pluralité de pièces ;
   - appliquer le modèle de prévision d'une consommation d'énergie globale aux pièces du local, de manière à ce que la température intérieure (Tint) de chaque pièce atteigne la température de consigne ($T_{cons}$) associée à ladite pièce ;
   - puis, définir une valeur maximale de la consommation d'énergie globale sur la période de temps, et, à partir du modèle de prévision de la consommation d'énergie globale du local :
   - obtenir en sortie de nouvelles températures de consigne à atteindre dans les pièces du local respectivement associées audites températures de consignes, de sorte que la valeur de la consommation d'énergie globale du local est inférieure ou égale à ladite valeur maximale à l'issue de la période de temps.

8. Procédé selon la revendication 6 en combinaison avec la revendication 7, dans lequel les valeurs du seuil de température intérieure (Tint) *Seuil* et de la consommation d'énergie totale en usages non thermosensibles *Talon* conservent leurs valeurs respectives déterminées pour le local, le procédé comprenant en outre, au cours de la période de temps, un calcul d'un coefficient de déperditions thermiques $GV_{pièce}$ pour chacune des pièces du local, ledit calcul comprenant :

   - obtenir des données historiques de la température extérieure ($T_{ext}$) ;

   et, pour chaque pièce du local :

   - obtenir des données historiques de la température intérieure (Tint) mesurée et de la consommation en énergie de chauffage de ladite pièce du local ;
   - calculer un écart positif $Pot_{degHPièce}$ entre la température intérieure (Tint) mesurée de ladite pièce et la température extérieure ($T_{ext}$) à chaque pas de temps pour chaque jour passé de ladite période de temps, et
   - si un nombre de jours passés, pour lesquels l'écart positif $Pot_{jegHPièce}$ est supérieur à un écart maximum et pour lesquels la consommation globale en énergie de chauffage est supérieure à 0, est supérieur à un nombre de jours maximum, le coefficient de déperditions thermiques de ladite pièce $GV_{pièce}$ est calculé par régression linéaire de l'équation :

$$C^{chauffage}(pièce) = GV * (Pot_{degHPièce} - Seuil),$$

   - autrement, le coefficient de déperditions thermiques $GV_{pièce}$ est calculé au moyen de l'équation :

$$GV_{pièce} = GV * Ratio_{pièce}$$

   où $Ratio_{pièce}$ est choisi parmi l'un et/ou l'autre :

   - le ratio d'un nombre de radiateurs dans ladite pièce du local par le nombre de radiateurs total du local ;
   - le ratio d'une puissance de chauffage installée dans ladite pièce par une puissance de chauffage totale du logement ;
   - le ratio d'une surface de ladite pièce par une surface totale du logement.

9. Procédé selon l'une des revendications 1 à 8, dans lequel au moins deux températures de consigne sont définies, et de préférence au moins trois températures de consigne, chaque température de consigne ($T_{cons}$) étant associée à une plage horaire récurrente d'un jour de la période de temps, les étapes de régulation du procédé étant effectuée pour chacune des températures de consigne, en fonction de la plage horaire dans laquelle les étapes du procédé sont mises en œuvre.

10. Programme informatique **caractérisé en ce qu'**il comporte des instructions pour la mise en œuvre du procédé selon l'une des revendications précédentes, lorsque ce programme est exécuté par un processeur.

11. Système informatique de pilotage et de régulation d'un système de chauffage d'un local, sur une période de temps, à partir d'une consigne reçue de température souhaitée définissant une température de consigne ($T_{cons}$), comportant un circuit de traitement informatique (DISP) pour la mise en œuvre du procédé selon l'une des revendications 1 à 9.

**Patentansprüche**

1. IT-gesteuertes Verfahren zur Steuerung und Regelung eines Heizungssystems einer Räumlichkeit über einen Zeitraum, ausgehend von einem empfangenen Sollwert einer gewünschten Temperatur, der eine Solltemperatur ($T_{soll}$) definiert, wobei das Verfahren die folgenden Schritte umfasst:

- Erstellen eines Modells zur Vorhersage eines Gesamtenergieverbrauchs der Räumlichkeit, der es ermöglicht, eine Innentemperatur ($T_{int}$) der Räumlichkeit gleich der Solltemperatur ($T_{soll}$) über den genannten Zeitraum aufrechtzuerhalten, wobei das Modell als Funktion der Solltemperatur ($T_{soll}$) durch eine Gleichung ausgedrückt wird:

$$C_{globale} = GV * \left(Pot_{degH} - Seuil\right) + Talon$$

wobei:

○ $C_{global}$ für den prognostizierten Gesamtenergieverbrauch der Räumlichkeit über den Zeitraum steht,
○ GV für einen Koeffizienten für die Wärmeverluste der Räumlichkeit steht,
○ $Pot_{degH}$ für eine positive Abweichung zwischen einer geschätzten Innentemperatur ($T_{int}$) der Räumlichkeit und einer Außentemperatur ($T_{ext}$) steht, wobei die geschätzte Innentemperatur ($T_{int}$) von der Solltemperatur ($T_{soll}$) abhängt und wobei die positive Abweichung in jedem Zeitschritt über den Zeitraum berechnet wird,
○ Seuil einen Schwellenwert der Innentemperatur ($T_{int}$) darstellt, bei dessen Überschreitung ein Heizungssystem der Räumlichkeit in den Deaktivierungszustand versetzt wird, und
○ $Talon$ für den Gesamtenergieverbrauch der Räumlichkeit für nicht wärmeempfindliche Zwecke steht, der aus statistischen Daten erhalten wurde;

- dann Bestimmen eines Maximalwertes des Gesamtenergieverbrauchs über den Zeitraum, **dadurch gekennzeichnet, dass** das Verfahren den folgenden Schritt umfasst:
ausgehend von dem Modell zur Vorhersage des Gesamtenergieverbrauchs der Räumlichkeit:
o am Ausgang Erhalten einer neuen Solltemperatur ($T_{soll'}$), die in der Räumlichkeit erreicht werden soll, so dass der Wert des Gesamtenergieverbrauchs der Räumlichkeit nach Ablauf des Zeitraums kleiner oder gleich dem Maximalwert ist,
- wobei das Verfahren einen weiteren Schritt des Sendens der neuen Solltemperatur ($T_{soll'}$) an einen Thermostat umfasst, der die Steuerung und Regelung des Heizungssystems ermöglicht,

wobei das Modell ferner zur Vorhersage des Energieverbrauchs durch iterative Berechnung der Innentemperatur (Tint) der Räumlichkeit aus den thermischen Parametern (K1, K2) der Räumlichkeit, der Außentemperatur ($T_{ext}$) und der in der vorherigen Iteration berechneten Innentemperatur ($T_{int}$) erstellt wird.

2. Verfahren nach Anspruch 1, wobei eine Konstruktion des Modells einen vorhergehenden Schritt umfasst:

- eine Schätzung der Innentemperatur ($T_{int}$) der Räumlichkeit, wobei die Schätzung iterativ in jedem Zeitschritt $\Delta t$ durchgeführt wird, wobei die Schätzung ausgedrückt wird durch:

$$T_{int}(i) = T_{int}(i-1) + \left(K_1 * \acute{E}tat_{chauffage} - K_2 * \left(T_{int}(i-1) - T_{ext}(i-1)\right)\right)\Delta t$$

wobei:

- $T_{int}$ die geschätzte Innentemperatur ($T_{int}$) bei der Iteration i ist,
- $K_1$, $K_2$ thermische Parameter der Räumlichkeit sind, die für einen Temperaturanstieg bzw. einen Temperaturabfall der Räumlichkeit stehen, wobei $K_1$, $K_2$ aus historischen Daten der Räumlichkeit gewonnen werden,
- État$_{chauffage}$ ein boolescher Ausdruck ist, der für den Zustand der Aktivierung oder Deaktivierung des Heizungssystems steht,
- Text für die Außentemperatur (Text) der Räumlichkeit steht, die aus vorhergesagten meteorologischen Daten abgeleitet wurde;

mit einer ersten Iteration oder einem Wert der Anfangstemperatur $T_{int}$(i0) der aus einem und/oder dem anderen der folgenden gewählt ist:

- einer Standardtemperatur,
- der Solltemperatur ($T_{soll}$),
- einer gemessenen Temperatur;

und

- eine Bestimmung einer positiven Abweichung zwischen der geschätzten Innentemperatur ($T_{int}$) der Räumlichkeit und der Außentemperatur ($T_{ext}$) in jedem Zeitschritt ist gegeben durch:

$$Pot_{degH} = \Delta t \sum_{i=i0}^{I} \max\left[0, (T_{int}(i) - T_{ext}(i))\right]$$

wobei:

- $Pot_{degH}$ für die positive Abweichung zwischen der geschätzten Innentemperatur ($T_{int}$) der Räumlichkeit und der Außentemperatur ($T_{ext}$) über den gesamten Zeitraum steht;
- $T_{int}$(i) und $T_{ext}$(i) jeweils für die geschätzte Innentemperatur ($T_{int}$) bzw. die Außentemperatur ($T_{ext}$) in jedem Zeitschritt stehen.

3. Verfahren nach Anspruch 2, wobei in jedem Zeitschritt ein Vergleich zwischen dem geschätzten Wert der Innentemperatur ($T_{int}$) und dem Wert der Solltemperatur ($T_{soll}$) durchgeführt wird, und wenn der Wert der geschätzten Temperatur in diesem Zeitschritt größer oder gleich dem Wert der Solltemperatur ($T_{soll}$) ist:

- der boolesche Ausdruck État$_{chauffage}$ auf null gesetzt wird.

4. Verfahren nach einem der Ansprüche 2 oder 3, wobei in jedem Zeitschritt ein Vergleich zwischen dem geschätzten Wert der Innentemperatur (Tint) und dem Wert der Solltemperatur ($T_{soll}$) durchgeführt wird und, wenn der geschätzte Wert der Temperatur in diesem Zeitschritt kleiner als der Wert der Solltemperatur ($T_{soll}$) ist:

- der boolesche Ausdruck État$_{chauffage}$ auf 1 gesetzt wird.

5. Verfahren nach einem der Ansprüche 2 bis 4, wobei das Verfahren einen Schritt der Initialisierung der Werte des Wärmeverlustkoeffizienten GV, des Innentemperaturschwellenwerts ($T_{int}$) Seuil und des Gesamtenergieverbrauchs für nicht wärmeempfindliche Zwecke *Talon* mittels einer thermischen Simulation der Räumlichkeit umfasst, die es ermöglicht, geschätzte Energieverbrauchsdaten zu erzeugen, wobei die initialisierten Werte der Parameter GV, Seuil und *Talon* in das Vorhersagemodell eingespeist werden.

6. Verfahren nach Anspruch 4, **dadurch gekennzeichnet, dass** während des Zeitraums die Werte des Wärmeverlustkoeffizienten GV, des Schwellenwertes der Innentemperatur ($T_{int}$) *Seuil* und des Gesamtenergieverbrauchs für nicht wärmeempfindliche Zwecke *Talon* neu berechnet werden, wobei die Neuberechnung Folgendes umfasst:

- Erhalten von historischen Daten der gemessenen Innentemperatur ($T_{int}$), der Außentemperatur ($T_{ext}$) und des

Gesamtverbrauchs an Heizenergie,

- Berechnen der positiven Abweichung Pot$_{degH}$ zwischen der gemessenen Innentemperatur (T$_{int}$) der Räumlichkeit und der Außentemperatur (T$_{ext}$) in jedem Zeitschritt für jeden vergangenen Tag des Zeitraums, und
- wenn eine Anzahl von vergangenen Tagen, an denen die positive Abweichung *Pot$_{degH}$* größer als eine maximale Abweichung ist und an denen der Gesamtenergieverbrauch größer als 0 ist, der Wärmeverlustkoeffizient GV, der Schwellenwert der Innentemperatur (Tint) *Seuil* und der Gesamtenergieverbrauch für nicht wärmeempfindliche Zwecke *Talon* nach einem ersten Modus berechnet werden, oder
- wenn eine Anzahl von vergangenen Tagen, an denen die positive Abweichung *Pot$_{degH}$* kleiner als eine minimale Abweichung ist, größer ist als eine minimale Anzahl von Tagen, der Wärmeverlustkoeffizient GV, der Schwellenwert der Innentemperatur (T$_{int}$) *Seuil* und der Gesamtenergieverbrauch für nicht wärmeempfindliche Zwecke *Talon* nach einem zweiten Modus berechnet werden,
- andernfalls behalten der Wärmeverlustkoeffizient GV, der Schwellenwert der Innentemperatur (T$_{int}$) *Seuil* und der Gesamtenergieverbrauch für nicht wärmeempfindliche Zwecke *Talon* ihre jeweiligen Werte bei, die im Initialisierungsschritt ermittelt wurden.

7. Verfahren nach einem der Ansprüche 1 bis 6, **dadurch gekennzeichnet, dass** es umfasst:

- Festlegen mehrerer Solltemperaturen, die jeweils einem Raum der Räumlichkeit aus einer Vielzahl von Räumen zugeordnet sind;
- Anwenden des Modells zur Vorhersage des Gesamtenergieverbrauchs auf die Räume der Räumlichkeit, so dass die Innentemperatur (T$_{int}$) jedes Raumes die dem Raum zugeordnete Solltemperatur (T$_{soll}$) erreicht;
- dann Festlegen eines Maximalwertes für den Gesamtenergieverbrauch über den Zeitraum und anhand des Vorhersagemodells des Gesamtenergieverbrauchs der Räumlichkeit:
- am Ausgang Erhalten neuer Solltemperaturen, die in den Räumen der Räumlichkeit erreicht werden sollen, die jeweils den Solltemperaturen zugeordnet sind, so dass der Wert des Gesamtenergieverbrauchs der Räumlichkeit kleiner oder gleich dem Maximalwert über den Zeitraum ist.

8. Verfahren nach Anspruch 6 in Kombination mit Anspruch 7, wobei die Werte des Schwellenwertes der Innentemperatur (Tint) *Seuil* und des Gesamtenergieverbrauchs für nicht wärmeempfindliche Zwecke *Talon* ihre jeweiligen für die Räumlichkeit bestimmten Werte beibehalten, wobei das Verfahren ferner während des Zeitraums eine Berechnung eines Wärmeverlustkoeffizienten GV$_{pièce}$ für jeden der Räume der Räumlichkeit umfasst, wobei die Berechnung Folgendes umfasst:

- Erhalten von historischen Daten der Außentemperatur (T$_{ext}$);

und, für jeden Raum der Räumlichkeit:

- Erhalten von historischen Daten der gemessenen Innentemperatur (T$_{int}$) und des Heizenergieverbrauchs des betreffenden Raums der Räumlichkeit;
- Berechnen einer positive Abweichung Pot$_{degHPièce}$ zwischen der gemessenen Innentemperatur (T$_{int}$) des Raums und der Außentemperatur (T$_{ext}$) in jedem Zeitschritt für jeden vergangenen Tag des Zeitraums, und
- wenn eine Anzahl von vergangenen Tagen, an denen die positive Abweichung Pot$_{degHPièce}$ größer als eine maximale Abweichung ist und an denen der Gesamtheizenergieverbrauch größer als 0 ist, größer als eine maximale Anzahl von Tagen ist, der Wärmeverlustkoeffizient des Raums GV$_{pièce}$ durch lineare Regression der folgenden Gleichung berechnet wird:

$$C^{chauffage}(pièce) = GV * (Pot_{degHPièce} - Seuil),$$

- andernfalls wird der Wärmeverlustkoeffizient GV$_{pièce}$ mit Hilfe der folgenden Gleichung berechnet:

$$GV_{pièce} = GV * \text{Ratio}_{pièce}$$

wobei Ratio$_{pièce}$ aus einem und/oder dem anderen gewählt wird:

- das Verhältnis einer Anzahl von Heizkörpern in dem genannten Raum der Räumlichkeit zu der Gesamtzahl von Heizkörpern der Räumlichkeit;

- das Verhältnis einer in dem Raum installierten Heizleistung zu einer Gesamtheizleistung der Wohnung;
- das Verhältnis der Fläche des Raumes zur Gesamtfläche der Wohnung.

9. Verfahren nach einem der Ansprüche 1 bis 8, wobei wenigstens zwei Solltemperaturen und vorzugsweise wenigstens drei Solltemperaturen festgelegt werden, wobei jede Solltemperatur ($T_{soll}$) einem wiederkehrenden Zeitbereich eines Tages des Zeitraums zugeordnet ist und die Schritte zur Regelung des Verfahrens für jede der Solltemperaturen in Abhängigkeit von dem Zeitbereich, in dem die Schritte des Verfahrens ausgeführt werden, durchgeführt werden.

10. Computerprogramm, **dadurch gekennzeichnet, dass** es Anweisungen zur Durchführung des Verfahrens nach einem der vorhergehenden Ansprüche enthält, wenn dieses Programm von einem Prozessor ausgeführt wird.

11. Computersystem zur Steuerung und Regelung eines Systems zur Beheizung einer Räumlichkeit über einen Zeitraum, ausgehend von einem Sollwert der gewünschten Temperatur, der eine Solltemperatur ($T_{soll}$) definiert, mit einer Computerverarbeitungsschaltung (DISP) zur Durchführung des Verfahrens nach einem der Ansprüche 1 bis 9.

**Claims**

1. Method, implemented by computer-based means, for controlling and regulating a system for heating premises, over a period of time, based on a received, desired temperature setpoint defining a setpoint temperature ($T_{cons}$), the method including the steps of:

   - developing a model for forecasting a total energy consumption of the premises, allowing an indoor temperature (Tint) inside the premises to be maintained which is equal to the setpoint temperature ($T_{cons}$) over said period of time, said model being expressed as a function of the setpoint temperature ($T_{cons}$) by an equation:

$$C_{total} = GV * \left(Pot_{degH} - Threshold\right) + Baseload$$

   where:

   -- $C_{total}$ represents the total energy consumption forecast for the premises over the period of time,
   -- GV represents a heat loss coefficient of the premises,
   -- $Pot_{degH}$ represents a positive deviation between an estimated indoor temperature (Tint) of the premises, and an outdoor temperature ($T_{ext}$), said estimated indoor temperature (Tint) being dependent on the setpoint temperature ($T_{cons}$), and said positive deviation being calculated at each time step over the period of time,
   -- $Threshold$ represents an indoor temperature threshold (Tint) above which a system for heating the premises is placed in a deactivated state, and
   -- $Baseload$ represents a total energy consumption for non-heat-sensitive uses of the premises, obtained from statistical data;

   - then defining a maximum value of the total energy consumption over the period of time, **characterised in that** the method comprises the step of:
   based on the model for forecasting the total energy consumption of the premises:
   --- obtaining, as an output, a new setpoint temperature ($T_{cons}$') to be reached in the premises such that the value of the total energy consumption of the premises is less than or equal to said maximum value at the end of the period of time,
   - the method comprising a further step of sending the new setpoint temperature ($T_{cons}$') to a thermostat allowing the heating system to be controlled and regulated, furthermore the model for forecasting the energy consumption is drawn up by iteratively calculating the indoor temperature (Tint) of the premises from thermal parameters ($K_1$, K2) of the premises, the outdoor temperature ($T_{ext}$) and the indoor temperature (Tint) calculated during the previous iteration.

2. Method according to claim 1, wherein one construction of the model comprises a preliminary step of:

   - estimating the indoor temperature (Tint) of the premises, the estimation being carried out iteratively at each time step $\Delta t$, said estimation being expressed as:

$$T_{int}(i) = T_{int}(i-1) + \left(K_1 * State_{heating} - K_2 * \left(T_{int}(i-1) - T_{ext}(i-1)\right)\right)\Delta t$$

where:

-- $T_{int}$ is the indoor temperature (Tint) estimated at the iteration $i$,
-- $K_1$, $K_2$ are thermal parameters of the premises, respectively representing a rise in temperature and a fall in temperature of the premises, $K_1$, $K_2$ being obtained from historical data for the premises,
-- $State_{heating}$ is a Boolean representing a state of activation or deactivation of the heating system,
-- $T_{ext}$ represents the outdoor temperature ($T_{ext}$) of the building obtained from weather forecasts;

with a first iteration where a value of the initial temperature $T_{int}(i0)$ is selected from either or both of:

-- a default temperature,
-- the setpoint temperature ($T_{cons}$),
-- a measured temperature;

and
- a determination of a positive deviation between the estimated indoor temperature (Tint) of the premises and the outdoor temperature ($T_{ext}$) at each time step is given by:

$$Pot_{degH} = \Delta t \sum_{i=i0}^{I} max\left[0, \left(T_{int}(i) - T_{ext}(i)\right)\right]$$

where:

-- $Pot_{degH}$ represents the positive deviation between the estimated indoor temperature (Tint) of the premises and the outdoor temperature ($T_{ext}$) over the entire period of time;
-- $T_{int}(i)$ and $T_{ext}(i)$ respectively represent said estimated indoor temperature (Tint) and said outdoor temperature ($T_{ext}$) at each time step.

3.  Method according to claim 2, wherein at each time step, a comparison between the value of the estimated indoor temperature (Tint) and the value of the setpoint temperature ($T_{cons}$) is carried out and, if the value of the estimated temperature at this time step is greater than or equal to the value of the setpoint temperature ($T_{cons}$):

    - the Boolean $State_{heating}$ is forced to zero.

4.  Method according to one of claims 2 to 3, wherein at each time step, a comparison between the value of the estimated indoor temperature (Tint) and the value of the setpoint temperature ($T_{cons}$) is carried out and, if the value of the estimated temperature at this time step is less than the value of the setpoint temperature ($T_{cons}$):

    - the Boolean $State_{heating}$ is forced to 1.

5.  Method according to one of claims 2 to 4, wherein the method comprises a step of initialising the values of the heat loss coefficient *GV,* of the indoor temperature threshold (Tint) *Threshold* and of the total energy consumption for non-heat-sensitive uses *Baseload* by means of a thermal simulation of the premises to generate estimated energy consumption data, said initialised values of the parameters *GV, Threshold* and *Baseload* being injected into said forecasting model.

6.  Method according to claim 4, **characterised in that**, over the period of time, the values of the heat loss coefficient *GV,* of the indoor temperature threshold (Tint) *Threshold* and of the total energy consumption for non-heat-sensitive uses *Baseload* are recalculated, the recalculation comprising:

    - obtaining historical data for the measured indoor temperature (Tint), for the outdoor temperature ($T_{ext}$) and for the total heating energy consumption,

- calculating the positive deviation $Pot_{degH}$ between the measured indoor temperature (Tint) of the premises and the outdoor temperature ($T_{ext}$), at each time step for each past day of the period of time, and
- if a number of past days, for which the positive deviation $Pot_{degH}$ is greater than a maximum deviation and for which the total energy consumption is greater than 0, is greater than a maximum number of days, the heat loss coefficient *GV,* the indoor temperature threshold (Tint) *Threshold* and the total energy consumption for non-heat-sensitive uses *Baseload* are calculated according to a first mode, or
- if a number of past days, for which the positive deviation $Pot_{degH}$ is less than a minimum deviation, is greater than a minimum number of days, the heat loss coefficient *GV,* the indoor temperature threshold (Tint) *Threshold* and the total energy consumption for non-heat-sensitive uses *Baseload* are calculated according to a second mode,
- otherwise, the heat loss coefficient *GV,* the indoor temperature threshold (Tint) *Threshold* and the total energy consumption for non-heat-sensitive uses *Baseload* retain their respective values as determined during the initialisation step.

**7.** Method according to one of claims 1 to 6, **characterised in that** it comprises:

- defining a plurality of setpoint temperatures respectively associated with one of a plurality of rooms within the premises;
- applying the model for forecasting a total energy consumption to the rooms within the premises, such that the indoor temperature (Tint) of each room reaches the setpoint temperature ($T_{cons}$) associated with said room;
- then, defining a maximum value of the total energy consumption over the period of time, and, based on the model for forecasting the total energy consumption of the premises:

- obtaining, as an output, new setpoint temperatures to be reached in the rooms within the premises respectively associated with said setpoint temperatures, such that the value of the total energy consumption of the premises is less than or equal to said maximum value at the end of the period of time.

**8.** Method according to claim 6 in combination with claim 7, wherein the values of the indoor temperature threshold (Tint) *Threshold* and of the total energy consumption for non-heat-sensitive uses *Baseload* retain their respective values as determined for the premises, the method further comprising, over the period of time, calculating a heat loss coefficient $GV_{room}$ for each of the rooms within the premises, said calculation comprising:

- obtaining historical data for the outdoor temperature ($T_{ext}$);

and, for each room within the premises:

- obtaining historical data for the measured indoor temperature (Tint) and for the heating energy consumption of said room within the premises;
- calculating a positive deviation $Pot_{degHRoom}$ between the measured indoor temperature (Tint) of said room and the outdoor temperature ($T_{ext}$) at each time step for each past day of said period of time, and
- if a number of past days, for which the positive deviation $Pot_{degHRoom}$ is greater than a maximum deviation and for which the total heating energy consumption is greater than 0, is greater than a maximum number of days, the heat loss coefficient of said room $GV_{room}$ is calculated by linear regression of the equation:

$$C^{heating}(room) = GV * \left(Pot_{degHRoom} - Threshold\right),$$

- otherwise, the heat loss coefficient $GV_{room}$ is calculated using the equation:

$$GV_{room} = GV * Ratio_{room}$$

where $Ratio_{room}$ is selected from either or both of:

- the ratio of a number of radiators in said room within the premises to the total number of radiators in the premises;
- the ratio of a heating power installed in said room to a total heating power of the dwelling;
- the ratio of a surface area of said room to a total surface area of the dwelling.

9. Method according to one of claims 1 to 8, wherein at least two setpoint temperatures are defined, and preferably at least three setpoint temperatures, each setpoint temperature ($T_{cons}$) being associated with a recurring time slot of a day in the period of time, the regulation steps of the method being carried out for each of the setpoint temperatures, as a function of the time slot in which the steps of the method are implemented.

10. Computer program **characterised in that** it includes instructions for implementing the method according to one of the preceding claims, when this program is executed by a processor.

11. Computer system for controlling and regulating a system for heating premises, over a period of time, based on a received, desired temperature setpoint defining a setpoint temperature ($T_{cons}$), including a computer processing circuit (DISP) for implementing the method according to one of claims 1 to 9.

**FIG. 1**

EP 3 847 520 B1

$$T_{cons} \quad S1$$

$$T_{int}(i) = T_{int}(i-1) + (K_1.Etat_{chauffage} - K_2(T_{int}(i-1) - T_{ext}(i-1))).\Delta t \quad S2$$

$$i = I \;?$$

NON

OUI

$$i = i + 1 \quad S4$$

$$Pot_{degH} = \Delta t \sum_{i=i0}^{I} max \, [0,(T_{int}(i) - T_{ext}(i))] \quad S5$$

$$C_{globale} = GV(Pot_{degH} - Seuil) + Talon$$

S6

S3

$$C_{globaleMax} \quad S7$$

$$T'_{cons} \quad S8$$

## FIG. 2

FIG. 3

**FIG. 4**

S30

Données historiques
$T_{int}$, $T_{ext}$

S31

Données historiques
$C_{globale}$

Calcul $Pot_{degH}$

S32

$C = $ médiane $(C_{globale})$
pour $Pot_{degH} < écart_{min}$

S33

Calcul de l'erreur RMSE
pour $Pot_{degH} < écart_{min}$

S34

Récupération des valeurs pour
lesquelles l'erreur est la plus petite

S35

Talon = C
GV = $GV_{init}$
Seuil = $Seuil_{init}$

S36

## FIG. 5

**FIG. 6**

S51

$$T_{int}(i=0) = T_{int_{init}}, \ Etat_{chauffage} = \begin{cases} 1 \ si \ T_{init} < T_{cons} \\ 0 \ sinon \end{cases}$$

i + 1 — S52

$$T_{int}(i) = T_{int}(i-1) + \Delta t \ (Etat_{chauffage} \cdot K_1 + (T_{int}(i-1) - T_{ext}(i-1)) \ K_2)$$ — S53

$$Etat_{chauffage} = \begin{cases} 1 \ si \ T_{int}(i) < T_{cons} \\ 0 \ sinon \end{cases}$$ — S54

S55

NON     i = I

OUI

$T_{int}$ — S56

## FIG. 7

FIG. 8

EP 3 847 520 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3045999 A
- FR 2964727
- WO 2017192752 A
- US 2014316584 A